# EUROPÄISCHE PATENTSCHRIFT

(11) **EP 1 062 759 B1**
(45) Veröffentlichungstag und Bekanntmachung des Hinweises auf die Patenterteilung: **10.05.2006**
(21) Anmeldenummer: 99958069.9
(22) Anmeldetag: 18.11.1999
(51) Int. Cl.: H04L 1/24

(54) **VERFAHREN UND ANORDNUNG FÜR BITFEHLERSTRUKTUR-MESSUNGEN VON DATENÜBERTRAGUNGSKANÄLEN**
METHOD AND ARRANGEMENT FOR MEASURING BIT ERROR STRUCTURES OF DATA TRANSMISSION CHANNELS
PROCEDE ET SYSTEME POUR EFFECTUER DES MESURES DE STRUCTURE D'ERREURS SUR LES BITS SUR DES CANAUX DE TRANSMISSION DE DONNEES

(30) Priorität: 17.12.1998 DE 19860125
(43) Veröffentlichungstag der Anmeldung: 27.12.2000
(73) Patentinhaber: Deutsche Telekom AG, 53113 Bonn (DE)
(72) Erfinder: LEHMANN, Erwin, D-14197 Berlin (DE)
(86) Internationale Anmeldenummer: PCT/EP1999/008865
(87) Internationale Veröffentlichungsnummer: WO 2000/036784

(56) Entgegenhaltungen:
- DE-A- 2 643 836
- US-A- 3 824 548
- HERZOG W.: "Ein Bitfehlerstruktur-Messgerät für den Betrieb" TELEKOM PRAXIS, Bd. 74, Nr. 11, November 1997 (1997-11), Seiten 22-28, XP000884873 in der Anmeldung erwähnt
- PATENT ABSTRACTS OF JAPAN vol. 018, no. 486 (E-1604), 9. September 1994 (1994-09-09) & JP 06 164556 A (ANRITSU CORP), 10. Juni 1994 (1994-06-10)
- PATENT ABSTRACTS OF JAPAN vol. 1995, no. 11, 26. Dezember 1995 (1995-12-26) & JP 07 209382 A (FUJITSU LTD), 11. August 1995 (1995-08-11)

## Beschreibung

Die Erfindung betrifft das Gebiet der Meßeinrichtungen für digitale Übertragungstrecken gemäß dem Oberbegriff des Anspruchs 1.

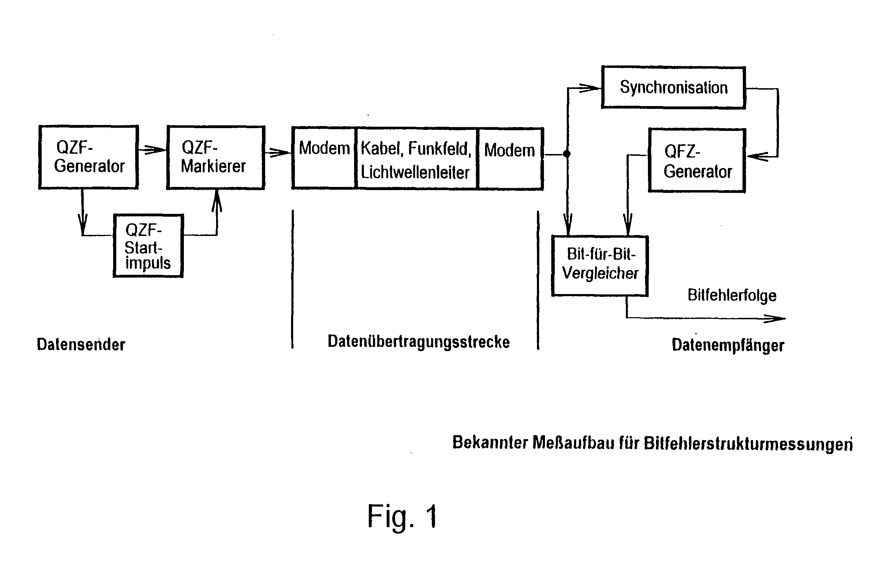

Bekannt sind Datenmeßgeräte, die mit Quasizufallsfolgen (QZF) als Meßsignal arbeiten. Dabei werden die gesendeten QZF nach ihrer Übertragung über einen zu beurteilenden Prüfling (Datenübertragungsstrecke) im **Bit-für-Bit-Vergleicher (Fig. 1)** des Datenmeßempfängers mit einem gleichartig erzeugten QZF-Referenzsignal verglichen.

Das Ergebnis dieses Vergleichs ist eine Binärsignalfolge, die für jedes Bit anzeigt, ob es richtig oder falsch übertragen wurde. Dieses Bitfehlersignal stellt die Bitfehlerstruktur dar, die als Zahlenfolge der aufeinanderfolgenden richtig bzw. falsch übertragenen Bits aufgezeichnet werden kann (Siehe Herzog, W.: Ein Bitfehlerstruktur-Meßgerät für den Betrieb telekom praxis, Jg. 74/1997, Heft 11).

Bekannt ist ferner die sendeseitige Eingabe einer Markierung an einer festliegenden Musterstelle der QZF. Die Markierung besteht aus einer Testfehlerserie von systematischen Bitinvertierungen, die regelmäßig, aber nicht bei jedem QZF-Zyklus eingeblendet wird. Die Testfehlerserie muß eine höhere Anzahl von Bits umfassen, als das die QZF erzeugende Schieberegister Stufen hat, damit sie sich eindeutig von streckenbedingten Übertragungsfehlern unterscheidet.

Da die Testfehlerserien empfangsseitig an bekannter Musterstelle der QZF als Bitfehler erscheinen, sind sie in der aufgezeichneten Bitfehlerstruktur als Stützstelle für QZF-Musterberechnungen verwendbar. Dadurch lassen sich Fehlersystematiken finden, die auf Gerätefehler im Zuge der gemessenen Übertragungsstrecke hindeuten. Eine Qualitätsverbesserung durch Erkennen und Beseitigen von Gerätefehlern ist das Hauptziel der Bitfehlerstruktur-Meßtechnik.

Wenn empfangsseitig der Taktabstand der Testfehlerserien überwacht wird, der einem ganzzahligen Vielfachen der QZF-Zykluslänge entsprechen muß, lassen sich Taktversätze berechnen, wie sie beim Ausfall des Zeichensynchronismus zwischen Meßsender und Meßempfänger (Slip) auftreten, z. B. infolge von Zellverlusten bei ATM-Messungen (Asynchronous Transfer Mode).

Um die Vorteile dieser hochwertigen Meßmethode nutzen zu können, muß sendeseitig ein passender QZF-Meßsender zur Verfügung stehen, der Meßdaten mit einer solchen QZF-Markierung aussenden kann. Gerade dies ist aber bei Streckenmessungen oftmals nicht gegeben, wenn sendeseitig nur handelsübliche Meßgeräte zur Verfügung stehen, die zwar mit QZF-Signalen arbeiten, aber eine Markierung der beschriebenen Art nicht kennen. Die Meßgeräte werden aber häufig wegen anderer Meßvorteile eingesetzt.

Derartige Meßvorteile können darin bestehen, daß aussagekräftigere Ende-zu-Ende-Messungen anstelle von Schleifenmessungen möglich sind, oder daß handelsübliche Meßgeräte auf der Sendeseite die passenden Meßschnittstellen liefern und dann keine Neuentwicklung am Bitfehlerstruktur-Meßplatz erforderlich ist.

Praktische Fälle von sendeseitig unterschiedlichen, meist handelsüblichen Meßgeräten ergeben sich einmal bei großer räumlicher Trennung von Sender und Empfänger im weltweiten Datenverkehr (Sender in Kalifornien, Empfänger in Berlin) und zum anderen bei Messungen zwischen Anschaltepunkten mit unterschiedlichen Schnittstellen (ATM-Übertragung mit der Inhouse-Rate von 25,6 Mbit/s beim Sender und der für ATM-Messungen üblichen leitungsseitigen STM1-Rate von 155,52 Mbit/s beim Empfänger).

Da ein sendeseitig eingesetztes Meßgerät oftmals keine optionale Eingabe von externen Testdaten zuläßt, die verfahrensgerecht mit einer QZF-Markierung ausgestattet sein könnten, muß man mit denjenigen QZF-Meßdaten auskommen, die das Meßgerät intern selbst bereitstellt.

Dem empfangsseitig eingesetzten Bitfehlerstruktur-Meßplatz fehlt dann aber die Testfehlerserie, die später als QZF-Marke bei der Auswertung der Bitfehlerstruktur-Aufzeichnungen dringend gebraucht wird.

Die Erfindung stellt sich die Aufgabe, eine sendeseitig fehlende QZF-Markierung verfahrenstechnisch so zu ersetzen, daß eine gleichwertige Auswertung für die Bitfehlerstruktur möglich ist.

Die Aufgabe wird dadurch gelöst, daß auf der Empfangsseite von Bitfehlerstruktur-Meßplätzen ein Ersatzmarkierer geschaffen wird, indem am Empfängereingang des Datenmeßgerätes, vor dem Bit-für-Bit-Vergleicher, zusätzlich eine QZF-Symbol-Erkennung, eine QZF-Startimpuls-Erzeugung und ein fallweise schaltbarer QZF-Markierer angeordnet werden.

Eine Ausführung der Erfindung zeigen die Bilder Fig. 1 bis 4, aus denen die Prinzipien des alten und neuen Meßaufbaus sowie die Einzelheiten der Erweiterung des Meßgeräteempfangsteils zu ersehen sind.

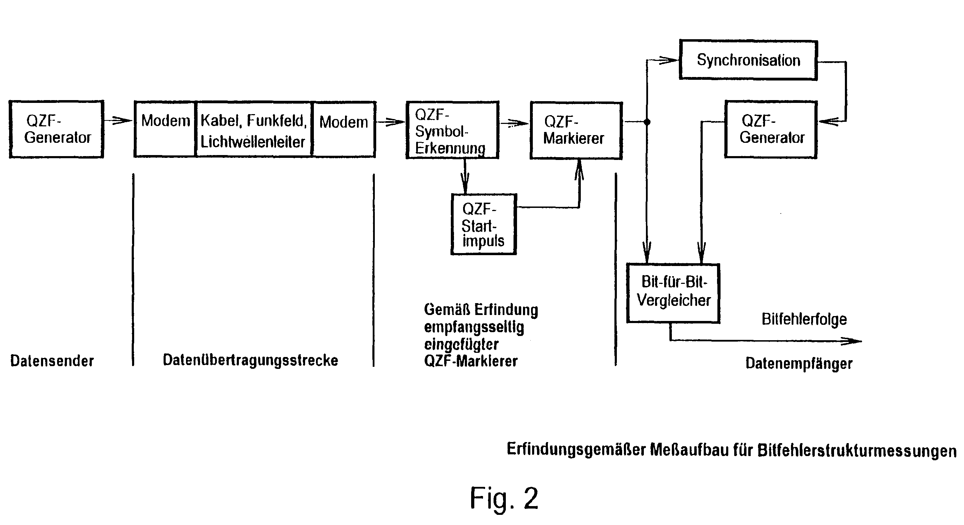

Ausgegangen wird in Fig. 1 von dem bekannten Meßaufbau für Bitfehlerstruktur-Messungen, bei dem der QZF-Datensender bereits mit einem QZF-Markierer versehen ist. Fig. 2 zeigt als Datensender einen QZF-Generator, der keinen QZF-Markierer enthält und somit Teil eines oben beschriebenen handelsüblichen Meßgerätes sein kann.

Der für Fehlerstrukturmessungen notwendige und erfindungsgemäß empfangsseitig eingefügte QZF-Markierer benötigt die zu markierende QZF-Musterstelle, die vom ankommenden Streckensignal, also von der gesendeten Meß-QZF abgeleitet wird. Die zu markierende Musterstelle wird von den in Fig. 2 dargestellten Blöcken QZF-Symbol-Erkennung und QZF-Startimpuls geliefert.

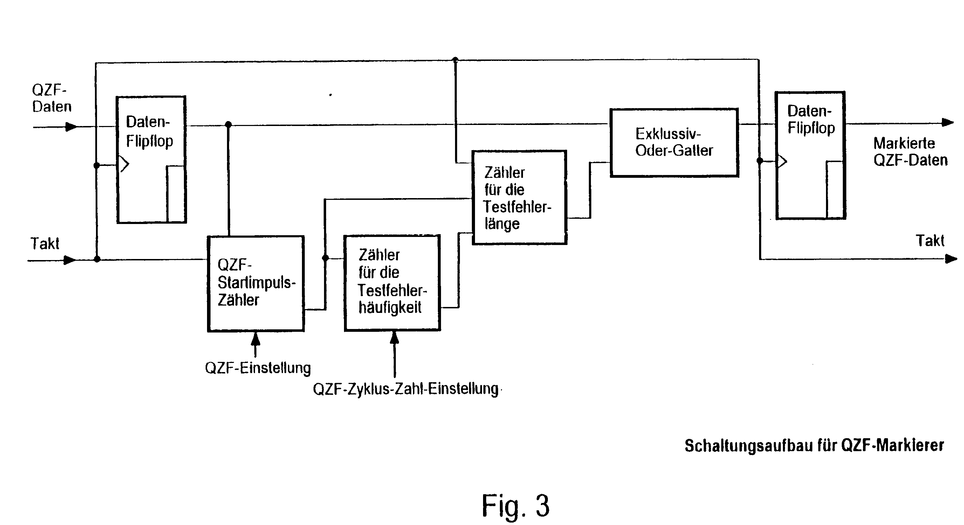

Eine Schaltungslösung für die drei in Fig. 2 dargestellten Blöcke, QZF-Symbol-Erkennung, QZF-Startimpuls und QZF-Markierer, zeigt Fig. 3, die später näher erläutert wird.

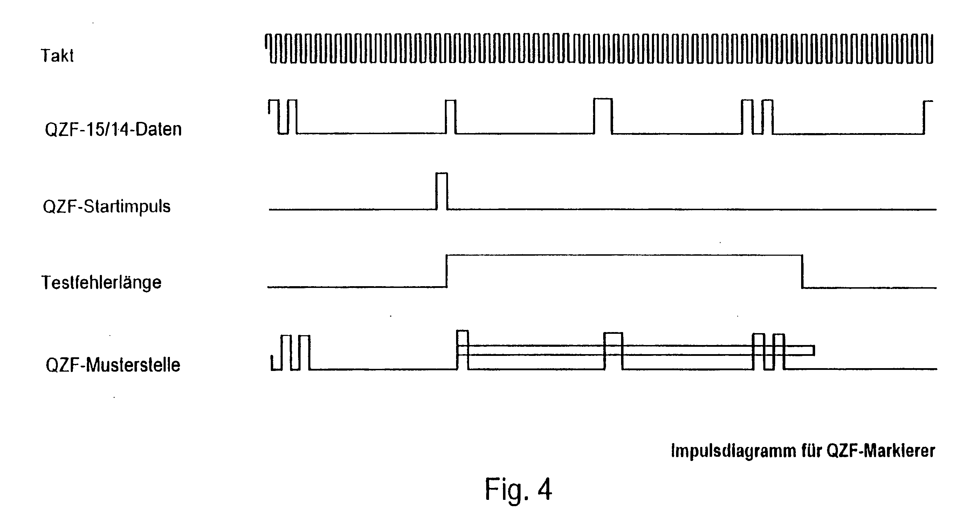

Die Wirkungsweise der Schaltung wird an einem fünfzeiligen Impulsdiagramm in Fig. 4 dargestellt.

Um den Schaltungsaufwand in vernünftigen Grenzen zu halten, ist es zweckmäßig, die nachträgliche empfangsseitige QZF-Markierung auf einige wichtige QZF-Typen zu beschränken.

QZF-Daten werden mit rückgekoppelten Schieberegistern erzeugt, deren Registerlänge und Rückkopplungsart die daraus entstehende QZF bestimmen. Die am häufigsten eingesetzten QZF sind die von der ITU (International Telecommunication Union) genormten QZF-23/18 und QZF-15/14, die beide als invertierte Datenfolge übertragen werden und in den Datenmeßgeräten der bedeutendsten Meßgeräte-Hersteller als einstellbares Testmuster verfügbar sind.

Fig. 4 zeigt in der ersten Zeile die Impulsfolge des Datentaktes. In der zweiten Zeile ist die Impulsfolge der inversen QZF-15/14 dargestellt, an der die erfindungsgemäß vorzunehmende QZF-Markierung vorgeführt wird.

Die nicht invertierte QZF-15/14 wird von einem 15-stufigen Schieberegister erzeugt, dessen Signale der 15. und 14. Stufe, binär addiert, bei jedem Taktimpuls auf den Eingang der 1. Stufe rückgekoppelt werden. Dabei entsteht ein QZF-Zyklus der Länge (2¹⁵-1) = 32767 bit, wenn man den Zustand des stehenden Schieberegisters (alle Stufen auf Low-Signal) schaltungstechnisch verhindert.

Beim taktgesteuerten Ablauf des QZF-Zyklus nimmt das Schieberegister nacheinander alle unterschiedlichen mit 15 Stufen erzeugbaren Zustände an, von denen einer dekodiert und zum Startpunkt für eine QZF-Markierung bestimmt werden kann.

In der dritten Zeile von Fig. 4 wird die Erzeugung eines Startimpulses aus dem inversen Datenzustand "alle Schieberegister-Stufensignale low" gezeigt. Der High-Impuls des Startimpulses erscheint nämlich dort, wo im QZF-Datensignal der zweiten Zeile gerade dieser einfach zu dekodierende Schieberegisterzustand vorgekommen ist. Dieser Schieberegisterzustand kommt im gesamten QZF-Zyklus von 32767 bit nur einmal vor. Immer an dieser QZF-Musterstelle wird ein Startimpuls von 1 bit Länge erzeugt.

Aus dem QZF-Startimpuls wird nun ein längerer und über mehrere Taktperioden reichender Testfehlerlängenimpuls entwickelt, der zur Testfehlererzeugung und damit zur Erzeugung der QZF-Marke verwendet werden soll. Der Testfehlerlängenimpuls ist in der vierten Zeile von Fig. 4 dargestellt. Er sollte sich in seiner Länge über mehr Taktperioden erstrecken als das Schieberegister der längsten verwendeten QZF Stufen hat, also hier mehr als 23 Bits umfassen. Es wurde in der vierten Zeile von Fig. 4 eine Impulslänge von 36 bit gewählt.

In der fünften Zeile von Fig. 4 sind die um 1 bit verschobenen QZF-Daten der zweiten Zeile zu erkennen, wobei die Musterstelle markiert ist, die nach einer einstellbaren Zahl von QZF-Zyklen für die Dauer des Testfehlerlängenimpulses invertiert wird und dann im Empfänger eine Testfehlerlänge von 36 aufeinanderfolgenden Bitfehlern ergibt, die sich stets an definierter gleicher QZF-Zyklus-Stelle befinden. Die Bitfehler können wegen ihrer Länge nicht mit Streckenbitfehlern verwechselt werden, da deren maximale einzelne Fehlerlänge immer von der Schieberegisterstufenzahl des QZF-Referenzsignal-Generators geprägt ist.

In der Schaltungslösung von Fig. 3 sind die von der Datenübertragungsstrecke kommenden Empfangs-Meßsignale mit QZF-Daten und Takt bezeichnet und werden von einem ersten Daten-Flipflop aufgenommen.

Um die vorgesehene QZF-Symbol-Erkennung, QZF-Startimpuls-Erzeugung und QZF-Markierung schaltungstechnisch zu erreichen, werden die QZF-Daten (hier als inverse QZF-15/14-Daten) und der Datentakt einem Zähler zugeführt und ein Kennzeichen für die QZF-Art beigegeben. Dieser Zähler dient zur Erzeugung des QZF-Startimpulses und ist so gesteuert, daß er beim Durchlauf der QZF-Daten jeweils die Einzellängen der Low-Zustände des nacheinander ablaufenden inversen QZF-Zyklus darauf prüft, ob die einmalig im Zyklus vorkommende Low-Signal-Länge von 15 bit vorgekommen ist und dies mit einem High-Signal an seinem Dekodier-Ausgang quittiert.

Der in einfacher Weise aufgebaute QZF-Startimpulszähler erfüllt somit bereits die Aufgaben der in Fig. 1 und Fig. 2 dargestellten QZF-Symbol-Erkennung und QZF-Startimpuls-Erzeugung. Es muß aber ein Überzählen der Bitzahl 15 verhindert sein. Der QZF-Startimpuls-Zähler darf das High-Signal, das den Startimpuls darstellt, immer dann nicht erzeugen, wenn mehr als die vorgesehenen 15 bit als Low-Signal-Länge festgestellt werden. Dies könnte bei einer Störung der Übertragung in Form einer Streckenunterbrechung vorkommen.

Da der Startimpuls für die nachträgliche empfangsseitige QZF-Markierung benutzt werden soll, muß eine störungsbedingte Fehlinterpretierung des Empfänger-Eingangssignals vermieden werden.

Der Schutz gegen eine Fehlinterpretierung des Empfänger-Eingangssignals kann auch dadurch weiter erhöht werden, daß mehr Bits als die 15 Stufen des QZF-Schieberegisters in die Musterstellen-Erkennung einbezogen werden. Das vergrößert dann aber den Schaltungsaufwand für die Dekodierschaltung. Dabei ist zu berücksichtigen, daß eine nicht vollständig auszuschließende Fehlinterpretierung des Empfänger-Eingangssignals nicht zu falschen Meßergebnissen führen muß, weil die erfindungsgemäße QZF-Markierung für eine nachfolgende Bitfehlerstruktur-Aufzeichnung verwendet wird und eine eventuelle Fehlinterpretierung in den Bitfehlerstruktur-Aufzeichnungen erkannt und bei der Auswertung noch kompensiert werden kann.

In Fig. 3 wird der vom ersten Zähler einmal pro Zyklus abgegebene QZF-Startimpuls einem zweiten Zähler zugeführt, der mit Hilfe einer QZF-Zyklus-Zahl-Kennung ein Testfehlerhäufigkeitssignal liefert, das festlegt, nach wievielen nicht markierten QZF-Zyklen wieder eine QZF-Marke eingefügt werden soll. Dieser Zähler für die Testfehlerhäufigkeit ist ein einfacher asynchron arbeitender Binärzähler, der mit dem QZF-Startimpuls getaktet wird und entsprechend der Zyklus-Zahl-Kennung nach 16, 32, 64, 128, 256, ... 32768 QZF-Zyklen ein Freigabesignal abgibt.

Wenn beispielsweise die Strecken-Übertragungsrate 2,048 Mbit/s beträgt und mit der QZF-23/18 gemessen wird, die eine Zyklus-Länge von (2²³-1) = 8388607 bit hat, wäre die zeitliche Dauer eines QZF-Zyklus etwa 4 Sekunden. Die Meßerfahrung lehrt aber, daß eine QZF-Markierung nach jeweils etwa 10 Minuten ausreichend wäre.

Eine zweckmäßige QZF-Zyklus-Zahl für die nicht markierten Zyklen könnte dabei 128 sein, was einer Einblendpause von knapp 9 Minuten entspricht. Bei der QZF-15/14, die sich wegen ihres erheblich kürzeren QZF-Zylus häufiger wiederholt, käme man auf eine einzustellende QZF-Zyklus-Zahl von 32768, um eine gleich lange Einblendpause zu erreichen.

Die Impulssignale des ersten Zählers (QZF-Startimpuls) und des zweiten Zählers (Testfehler-Freigabeimpuls) sowie der Datentakt werden einem dritten Zähler zugeführt, der den Impuls für die Testfehlerlänge, entsprechend der vierten Zeile in Fig. 4, erzeugt.

Das Ausgangssignal dieses Zählers für die Testfehlerlänge wird einem ersten Eingang eines Exklusiv-Oder-Gatters zugeführt. Der zweite Eingang des Exklusiv-Oder-Gatters ist mit dem Ausgang des ersten Daten-Flipflops verbunden, der die Empfänger-Eingangsdaten (inverse QZF-15/14) um 1 bit verzögert weitergibt.

Der Ausgang des Exklusiv-Oder-Gatters ist mit dem Eingang eines zweiten Daten-Flipflops verbunden. Dieses zweite Daten-Flipflop tastet das Verknüpfungssignal des Exklusiv-Oder-Gatters mit dem Datentakt aus und gibt an seinem Ausgang das gewünschte markierte QZF-Datensignal ab, das in der fünften Zeile in Fig. 4 dargestellt ist.

An der markierten QZF-Musterstelle wird das Datensignal durch seine invertierte Bitfolge ersetzt, immer entsprechend dem vom Exklusiv-Oder-Gatter in regelmäßiger Folge abgebenen Verknüpfungssignal.

Die erfindungsgemäß empfangsseitig markierte QZF sollte die gleiche QZF-Musterstelle erfassen und die gleiche Marken-Häufigkeit haben wie die bekannte sendeseitige QZF-Markierung, so daß die Bitfehlerstruktur-Aufzeichnungs- und Auswertungs-Programme in der gewohnten Weise verwendbar sind.

## Patentansprüche

1. Verfahren für Bitfehlerstruktur-Messungen von Datenübertragungskanälen mittels Quasizufallsfolgen als Meßsignal mit eingeblendeter Markierung in Form von Bitinvertierungen an definierter Musterstelle, bei dem die gesendeten Quasizufallsfolgen mit einem empfangsseitig erzeugten Quasizufallsfolgen - Referenzsignal Bit-für-Bit verglichen werden,
**dadurch gekennzeichnet,**
**daß** die Markierung der gesendeten Quasizufallsfolgen empfangsseitig, nach dem Durchlaufen der zu messenden Übertragungsstrecke, erfolgt, daß die Markierung vor der Bit-für-Bit Vergleichung stattfindet, und
**daß** die Markierung mit dem von der Sendeseite einlaufenden Quasizufallsfolgen-Signal synchronisiert wird.

2. Verfahren nach Anspruch 1, **dadurch gekennzeichnet, daß** die empfangsseitige Markierung der Quasizufallsfolgen der bekannten sendeseitigen Markierung angepaßt wird, besonders hinsichtlich
- definierter Musterstelle
- Marken-Häufigkeit und
- Anzahl der Taktperioden, die zur Unterscheidung von Leitungsbitfehlern die Stufenzahl der Quasizufallsfolgen übersteigen soll.

3. Verfahren nach Anspruch 1, **dadurch gekennzeichnet, daß** die empfangsseitige Markierung der Quasizufallsfolgen abschaltbar gestaltet wird, für den Fall, daß die Markierung bereits sendeseitig zur Verfügung steht.

4. Anordnung für Bitfehlerstruktur-Messungen von Datenübertragungskanälen mittels Quasizufallsfolgen als Meßsignal mit eingeblendeter Markierung in Form von Bitinvertierungen an definierter Musterstelle, bei der die gesendeten Quasizufallsfolgen mit einem empfangsseitig erzeugten Quasizufallsfolgen-Referenzsignal im Bit-für-Bit-Vergleicher des Datenmeßempfängers verglichen werden,
**dadurch gekennzeichnet,**
**daß** der Markierer für Quasizufallsfolgen empfangsseitig vor dem Bit-für-Bit-Vergleicher des Datenmeßempfängers angeschalted wird und mit dem von der Sendeseite einlaufenden Quasizufallsfolgen-Signal synchronisiert wird.

5. Anordnung nach Anspruch 4, **dadurch gekennzeichnet, daß** der empfangsseitig eingesetzte Markierer für Quasizufallsfolgen als integrierter Baustein Bestandteil eines Datenmeßgerätes ist.

## Claims

1. Method for bit error structure measurements in data transmission channels using as measurement signals pseudorandom sequences with overlaid marking in the form of bit inversions at a defined sample point, wherein the transmitted pseudorandom sequences are compared bit-for-bit with a pseudorandom reference signal sequence generated on the receive side, **characterized in that** the marking of the transmitted pseudorandom sequences takes place on the receive side following traversal of the transmission path to be measured, **in that** the marking takes place prior to the bit-for-bit comparison, and **in that** the marking is synchronized with the pseudorandom sequence signal arriving from the transmit side.

2. Method according to claim 1, **characterized in that** the receive-side marking of the pseudorandom sequences is matched to the known transmit-side marking, in particular with regard to
- defined sample point
- frequency of marking, and
- number of clock periods that the number of steps in the pseudorandom sequences must exceed to distinguish from line bit errors.

3. Method according to claim 1, **characterized in that** the receive-side marking of the pseudorandom sequences is designed such that it can be switched off in the event that the marking is already available on the transmit side.

4. Arrangement for bit error structure measurements in data transmission channels using as measurement signals pseudorandom sequences with overlaid marking in the form of bit inversions at a defined sample point, wherein the transmitted pseudorandom sequences are compared bit-for-bit with a pseudorandom reference signal sequence generated on the receive side in the bit-for-bit comparator of the measurement data receiver, **characterized in that** the marker for the pseudorandom sequences is connected on the receive side ahead of the bit-for-bit comparator of the measurement data receiver and is synchronized with the pseudorandom sequence signal arriving from the transmit side.

5. Arrangement according to claim 4, **characterized in that** the marker employed on the receive side for pseudorandom sequences is an integral component of a data measurement instrument.

## Revendications

1. Procédé de mesures de structure d'erreurs sur les bits sur des canaux de transmission de données moyennant des séquences quasi-aléatoires comme signal de mesure melangé avec un marquage sous la forme d'inversions de bits au niveau d'une position échantillon définie, dans lequel les séquences quasi-aléatoires envoyées sont comparées bit à bit avec un signal de référence de séquences quasi-aléatoires généré côté réception,
**caractérisé en ce que** le marquage des séquences quasi-aléatoires envoyées s'effectue côté réception après que celles-ci ont parcouru le trajet de transmission à mesurer et
**en ce que** le marquage intervient avant la comparaison bit à bit et
**en ce que** le marquage est synchronisé avec le signal de séquences quasi-aléatoires entrant en provenance du côté émission.

2. Procédé selon la revendication 1,
**caractérisé en ce que** le marquage côté réception des séquences quasi-aléatoires est adapté au marquage côté émission connu, notamment en ce qui concerne
- la position échantillon définie
- le taux de marquage et
- le nombre des périodes d'horloge qui, pour la distinction des erreurs de bits de ligne, doit être supérieur au nombre d'étages des séquences quasi-aléatoires.

3. Procédé selon la revendication 1,
**caractérisé en ce que** le marquage côté réception des séquences quasi-aléatoires est configuré de manière désactivable pour le cas où le marquage serait déjà disponible côté émission.

4. Système de mesures de structure d'erreurs sur les bits sur des canaux de transmission de données moyennant des séquences quasi-aléatoires comme signal de mesure melangé avec un marquage sous la forme d'inversions de bits au niveau d'une position échantillon définie, dans lequel les séquences quasi-aléatoires envoyées sont comparées bit à bit avec un signal de référence de séquences quasi-aléatoires généré côté réception,
**caractérisé en ce que** le marqueur pour des séquences quasi-aléatoires est activé côté réception avant le comparateur bit à bit du récepteur de mesure de données et synchronisé avec le signal de séquences quasi-aléatoires entrant en provenance du côté émission.

5. Système selon la revendication 4,
**caractérisé en ce que** le marqueur introduit côté réception pour les séquences quasi-aléatoires fait partie intégrante, sous la forme d'un composant intégré, d'un appareil de mesure de données.
